# EUROPÄISCHE PATENTANMELDUNG

(11) **EP 2 333 627 A2**
(43) Veröffentlichungstag der Anmeldung: **15.06.2011**
(21) Anmeldenummer: 10015289.1
(22) Anmeldetag: 03.12.2010
(51) Int. Cl.: G05B 19/418

(54) **Verfahren zur automatisierten Herstellung von Halbzeugen und Produkten in Individual- und/oder Einzelfertigung**

(30) Priorität: 11.12.2009 DE 102009057906
(71) Anmelder: Dula-Werke Dustmann & Co. GmbH, 44225 Dortmund (DE)
(72) Erfinder: Dustmann, Heinz-Herbert, 44227 Dortmund (DE)
(74) Vertreter: Mentzel, Norbert

(57) **Zusammenfassung**

Die Erfindung betrifft ein Verfahren zur automatisierten Herstellung von Halbzeugen und Produkten in Individual- und/oder Einzelfertigung, insbesondere bei plattenförmigem Rohmaterial. Hierbei ist wenigstens ein Bauteil (10) vorgesehen, welches bearbeitet werden soll und zumindest ein Transponder (20), welcher an dem Bauteil (10) angeordnet wird. Die Erfindung schlägt nun vor, über den Transponder (20) Daten zu einem oder mehreren Bearbeitungsschritten des Bauteils (10) verfügbar zu machen und außerdem Daten zur Produktzugehörigkeit des Bauteils (10) in dem Transponder (20) zu speichern. Weiterhin ist mindestens eine Ausleseeinheit (30) vorgesehen, die die im Transponder (20) gespeicherten Daten ausliest und an eine Steuerung weiterleitet. Die Steuerung steuert nunmehr die individuelle Zuführung (40) des Bauteils (10) zu der bzw. den Bearbeitungsanlagen (41, 41.1, 41.2, 41.3, 41.4, 41.5, 41.6) und/oder die in der bzw. den Bearbeitungsanlagen (41, 41.1, 41.2, 41.3, 41.4, 41.5, 41.6) durchgeführten Bearbeitungsschritte des Bauteils (10).

## Beschreibung

Die Erfindung betrifft ein Verfahren zur automatisierten Herstellung von Halbzeugen und Produkten in Individual-, Kleinstserien- bzw. Einzelfertigung. Diese werden jeweils projekt- bzw. produktspezifisch oder nach konkreten Kundenwünschen gefertigt. Für das Verfahren ist wenigstens ein Bauteil vorgesehen, welches bearbeitet werden soll und zumindest ein Transponder der an dem Bauteil angeordnet wird.

Bisher war es üblich Transponder an Bauteilen vorzusehen, um diese zu identifizieren. So wurde jedem Bauteil ein Transponder zugeordnet bzw. anstelle eines Transponders auch ein Barcode oder Ähnliches. Hierüber lässt sich dann das Bauteil genau identifizieren. Dies ist insbesondere im Bereich des Qualitätsmanagements und der Lagerhaltung, insbesondere auch in Hochregallagern von Bedeutung.

Das Dokument DE 10 2007 036 938 A1 beschreibt bereits die Verwendung eines Transponders zur Steuerung eines Herstellungsprozesses. Hierbei wird ein Rohling mit dem Transponder versehen, auf welchem Informationen über den Prozessverlauf gespeichert sind. An den einzelnen Stationen im Herstellungsprozess werden diese Informationen dann ausgelesen und entweder ein Bearbeitungsschritt durchgeführt oder der Rohling weitergeleitet. Diese Prozesssteuerung ist jedoch für die Individual- oder Einzelfertigung nicht geeignet. Der Rohling muss hier nämlich jede mögliche Bearbeitungsstation anfahren und erst dort wird entschieden ob tatsächlich eine Bearbeitung erfolgen soll oder nicht. Gerade bei der Individualfertigung kann es jedoch vorkommen, dass bei unterschiedlichen Produkten verschiedene Bearbeitungsstationen angefahren werden müssen und dies in unterschiedlicher Reihenfolge, ggf. auch mehrmals. Wird erst an der jeweiligen Bearbeitungsstation entschieden, ob tatsächlich eine Bearbeitung stattfinden soll, so wird der Herstellungsprozess stark verkompliziert, da ggf. jedes Bauteil alle möglichen Bearbeitungsstationen in nahezu jeder möglichen Reihenfolge anfahren muss. Dies ist unwirtschaftlich.

Bei der Herstellung von Bauteilen, Halbzeugen und Produkten in Kleinstserien oder gar in Individual- und Einzelfertigung ist es daher bisher nicht möglich, die Fertigungsprozesse zu automatisieren. Vielmehr müssen eine oder mehrere Bedienpersonen die einzelnen Bauteile ihren bestimmungsgemäßen Bearbeitungsschritten zuführen und dafür Sorge tragen, dass die einzelnen Bearbeitungsanlagen die korrekten Bearbeitungsschritte ausführen. Hierdurch wird eine Individual-, Einzel- oder Kleinstserienfertigung sehr teuer. Die so gefertigten Produkte werden auch üblicherweise nicht lange gelagert, sondern direkt an den Kunden versendet. Eine aufwändige Lagerhaltung entfällt daher. Vielmehr ist es wichtig, die einzelnen zu einem Produkt oder Projekt gehörenden Bauteile für den Versand zusammen zu stellen. Auch beim Versand ist es wichtig zu erfassen, welche Bauteile genau in welchen Stückzahlen zusammen versendet werden, um eine eventuelle Zwischenlagerung beim Kunden bzw. einen Zusammenbau vor Ort zu unterstützen.

Aufgabe der Erfindung ist es daher, ein Verfahren zu schaffen, bei dem Fertigungsprozesse für Individual- bzw. Kleinstserien oder auch für die Einzelfertigung automatisiert werden. Diese Aufgabe wird durch die Merkmale des Anspruchs 1 gelöst, denen folgende besondere Bedeutung zukommt:
Über den Transponder sind Daten zu einem oder mehreren Bearbeitungsschritten des Bauteils verfügbar. Eine oder mehrere Ausleseeinheiten lesen die im Transponder gespeicherten Daten aus und leiten diese an eine Steuerung weiter. Die Steuerung steuert dann die Zuführung des Bauteils zu der vorgesehenen Bearbeitungsanlage und/oder die an der Bearbeitungsanlage durchgeführten Bearbeitungsschritte des Bauteils. So wird mit jedem einzelnen Bauteil individuell verfahren. Das Bauteil kann somit automatisch zu den vorgesehenen Bearbeitungsanlagen gebracht und von diesen abtransportiert werden. Auch die Bearbeitungsanlagen können so automatisch die gewünschten Bearbeitungsschritte an jedem Bauteil individuell durchführen.

Da in dem Transponder darüber hinaus noch Informationen zur Produktzugehörigkeit des Bauteils gespeichert werden, ist es möglich, mehrere Bauteile die zu einer Baugruppe, einem Projekt oder einem Produkt gehören zusammen zu gruppieren.

Das Bauteil selber kann vor, während oder nach dem ersten Bearbeitungsschritt mit einem entsprechenden Transponder versehen werden. Auch ist es denkbar - je nach Anwendungsfall - den Transponder vor der Durchführung eines Bearbeitungsschrittes zu entfernen und nach der Durchführung den Transponder wieder dem Bauteil zuzuführen um eine Beschädigung des Transponders und einen damit gegebenenfalls einhergehenden Datenverlust zu verhindern. Ist es vorgesehen ein Rohmaterial zuzuschneiden bzw. in mehrere Bauteile zu unterteilen, so kann das Rohmaterial bereits mit mehreren Transpondern versehen werden, die dann so angeordnet sein können, dass bei der Unterteilung in mehrere Bauteile jedes Bauteil automatisch über einen Transponder verfügt. Weiterhin ist es möglich, den Transponder beim Zuschneiden des Rohmaterials am Bauteil anzubringen.

Bei einem bevorzugten Verfahren ist eine Kantenanleimstation vorgesehen welche eine Anleimkante an einer Kante des Bauteils anbringt. Der Transponder kann dann im Bereich der Kante automatisiert angeordnet und mit der Anleimkante überdeckt werden. Hierdurch ist der Transponder vor Einflüssen von außen geschützt und er ist auch nicht mehr sichtbar, so dass er über die ganze Lebensdauer des Produktes am Bauteil verbleiben kann.

Durch das erfindungsgemäße Verfahren ist es möglich, unterschiedlichste Bauteile durch die verschiedenen Bearbeitungsanlagen individuell zu bearbeiten um entsprechende Produkte und Halbzeuge in Kleinserien oder auch in Einzelfertigung zu erzeugen. Durch die automatische Handhabung jedes Bauteils, sind weniger Bedienpersonen erforderlich, was das Verfahren deutlich kostengünstiger macht. Als mögliches Einsatzgebiet kann zum Beispiel der Möbelbau, der Ladenbau oder auch der Innenausbau dienen. Andere Einsatzgebiete sind jedoch ebenfalls denkbar.

Der Transponder kann unterschiedliche Ausführungsformen annehmen. So kann er zum Beispiel scheibenförmig, dübelförmig, nagelförmig oder zylinderförmig sein. In diesem Fall wird er bevorzugt in einer Ausnehmung im Bauteil angeordnet. Diese Ausnehmung kann durch die unterschiedlichen Methoden in das Bauteil eingebracht werden, beispielsweise bei der Herstellung des Bauteils an sich oder auch nachträglich insbesondere durch fräsen, sägen, prägen, lochen oder ähnliches.

Auch ist es möglich, den Transponder auf die Oberfläche des Bauteils aufzubringen, beispielsweise durch Kleben. In diesem Fall kann der Transponder auf einer Folie oder Ähnlichem angebracht sein. Weiterhin ist es auch denkbar, den Transponder direkt auf das Bauteil zu drucken. Dies bietet sich insbesondere dann an, wenn der Transponder aus organischem Halbleitermaterial besteht. Ein solcher Transponder ist dann auch auslesbar, selbst wenn die Oberfläche des Bauteils beschichtet, lackiert, usw. wird.

Eine weitere Möglichkeit den Transponder im Bauteil vorzusehen besteht darin, einen Transponder besonders kleiner Abmessungen auszuwählen. Dieser kann dann in einem Trägermaterial wie beispielsweise einem Kunststoff- oder Leimtropfen bzw. -kügelchen angeordnet sein. Dieser Träger wird dann in das Bauteil eingebracht, beispielsweise in eine Pore des Bauteils oder auch in eine sonstige materialbedingte oder künstlich erzeugte Öffnung im Bauteil. Nach dem Einbringen des Trägers in das Bauteil kann das Bauteil erhitzt werden. Das Trägermaterial schmilzt dann und der Transponder richtet sich automatisch in dem Bauteil aus.

Die Anbringung bzw. Einbringung des Transponders in das Werkstück kann durch eine spezielle Einheit erfolgen, welche den Transponder vor, während oder nach dem ersten Bearbeitungsschritt am Bauteil anordnet. Die Anordnung kann automatisch oder auch manuell erfolgen.

Bei einem erfindungsgemäßen Verfahren in einer bevorzugten Ausführungsform können sämtliche Daten zu dem Bauteil, dessen Aufbau, Verarbeitung, Bestimmungsort, Recyclingmöglichkeiten, Versand, Transport-und/oder Zwischenlagermöglichkeiten direkt in dem Transponder gespeichert sein. Jeder Bearbeitungsanlage und/oder Transporteinheit und/oder Versandstation und/oder Zwischenlagerplatz bzw. weiteren eventuellen Stationen ist dann jeweils eine Ausleseeinheit zugeordnet, welche direkt erkennt um was für ein Bauteil es sich handelt bzw. wie nun weiter mit diesem zu Verfahren ist. Besonders bevorzugt kann auch noch vorgesehen sein, dass nach einem Bearbeitungsschritt, einem Transport oder einer Zwischenlagerung des Bauteils entsprechende Informationen auf dem Transponder gespeichert werden.

Wenn ein Bauteil beispielsweise an einer Ausleseeinheit einer Bearbeitungsanlage ankommt, liest die Ausleseeinheit die im Transponder gespeicherten Daten aus und steuert die Bearbeitungsanlage dahingehend, dass das Bauteil entsprechend der Vorgaben bearbeitet wird. Danach kann die Bearbeitungsanlage in einem bevorzugten Ausführungsbeispiel die Informationen über die durchgeführten Arbeiten wieder auf dem Transponder speichern. Eine weitere Ausleseeinheit, welche beispielsweise einem Transportsystem zugeordnet ist, kann die entsprechenden Informationen wiederum an eine Steuerung weiterleiten und damit dafür sorgen, dass das Bauteil über das gewünschte Transportmittel an eine weitere Bearbeitungsstation, ein Zwischenlager oder eine andere Stelle weitergeleitet wird. Als Transportmittel bieten sich beispielsweise Transportroboter, automatische Transportbänder, automatische Gabelstapler, über Leitschienen geführte Wagen, etc. an.

Im Fall des Möbelbaus und/oder Innenausbaus und/oder Ladenbaus können als Bearbeitungsanlagen beispielsweise Sägen, Fräsen, CNC-Maschinen, Kantenanleimmaschinen, Bohrmaschinen, Prägemaschinen, Beschichtungs- und Lackiermaschinen und so weiter dienen. Je nach herzustellendem Produkt bzw. Halbzeug ist eine Vielzahl von Bearbeitungsanlagen denkbar.

In einem weiteren bevorzugten Ausführungsbeispiel dienen die im Transponder gespeicherten Daten vornehmlich der Identifizierung des Bauteils. Werden die Daten über eine Ausleseeinheit ausgelesen, so sendet diese die ermittelten Informationen an eine zentrale Steuerung. In dieser Steuerung, beispielsweise in einem Computer bzw. in einem damit verbundenen Speicher oder einer Datenbank, sind dann die restlichen Informationen hinterlegt, wie die gewünschten Bearbeitungsschritte und Transportwege, Zwischenlagerplätze, Versanddaten und so weiter. Diese zentrale Steuerung steuert dann die Transportmittel und/oder die Bearbeitungsanlagen, damit mit dem Bauteil entsprechend verfahren wird. Auch bei dieser Ausführungsform können auf dem Transponder zusätzlich noch Daten zu Montage, Bestimmungsort, Inhaltsstoffen und/oder Recyclingmöglichkeiten des Bauteils gespeichert werden. Nach einer durchgeführten Bearbeitung am Bauteil bzw. einem Transport oder einer Zwischenlagerung des Bauteils können dann entsprechende Informationen wieder in dem mit der Steuerung verbundenem Speicher hinterlegt werden.

Weitere Vorteile und Ausführungsformen der Erfindung ergeben sich aus der nachfolgenden Beschreibung, den Unteransprüchen sowie den Zeichnungen. Es zeigen:
- Fig. 1:: Schematische Darstellung der Wege verschiedener Bauteile von einer ersten Bearbeitungsanlage zu weiteren Bearbeitungsanlagen.
- Fig. 2:: Schematisierter Weg eines Bauteils durch eine Bearbeitungsanlage.
- Fig. 3:: Schematisierter Weg eines Bauteils durch eine andere Bearbeitungsanlage.
- Fig. 4:: Schematische Darstellung eines Bauteils mit verschiedenen Möglichkeiten der Anbringung von Transpondern.

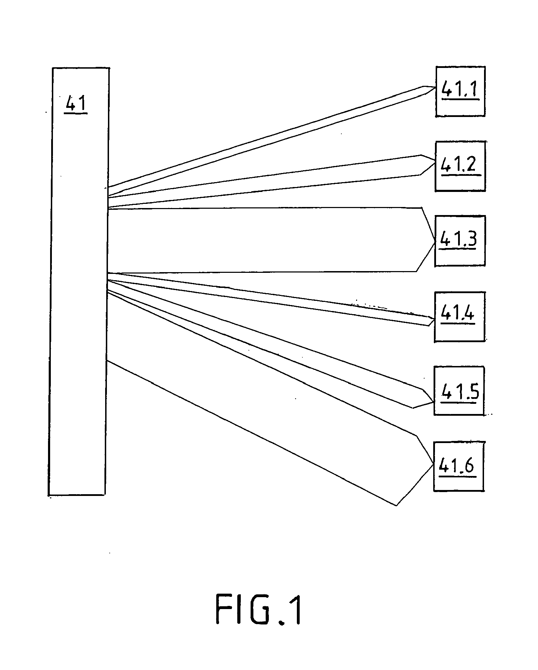

Fig. 1 zeigt schematisch die Wege, die verschiedene Bauteile 10 zurücklegen, nachdem sie die Bearbeitungsanlage 41 passiert haben. Die dicke der Pfeile gibt in etwa die Häufigkeit der zurückgelegten Wege der Bauteile 10 wieder. Die Bauteile 10 werden von der Bearbeitungsanlage 41 zu den weitere Bearbeitungsanlagen 41.1, 41.2, 41.3, 41.4, 41.5 oder 41.6 transportiert. Als weitere Bearbeitungsanlagen 41.1, 41.2, 41.3, 41.4, 41.5 oder 41.6 können hier auch Zwischenlager bzw. Versand oder eine Kommissionierung dienen. Selbstverständlich ist auch eine größere oder kleinere Anzahl an weiteren Bearbeitungsanlagen 41.1, 41.2, 41.3, 41.4, 41.5 oder 41.6 denkbar. Bei einem herkömmlichen Verfahren muss eine Bedienperson die Bauteile von der Bearbeitungsanlage 41 abnehmen und zu den gewünschten weiteren Bearbeitungsanlagen 41.1,41.2,41.3,41.4,41.5 oder 41.6 transportieren, bzw. diesen Transport veranlassen. Verfügen die einzelnen Bauteile 10 jedoch über einen Transponder 20, so können über eine entsprechende Ausleseeinheit 30 die gewünschten Informationen ermittelt werden und der Transport zur gewünschten weiteren Bearbeitungsanlage 41.1, 41.2, 41.3, 41.4, 41.5 oder 41.6 automatisiert veranlasst werden.

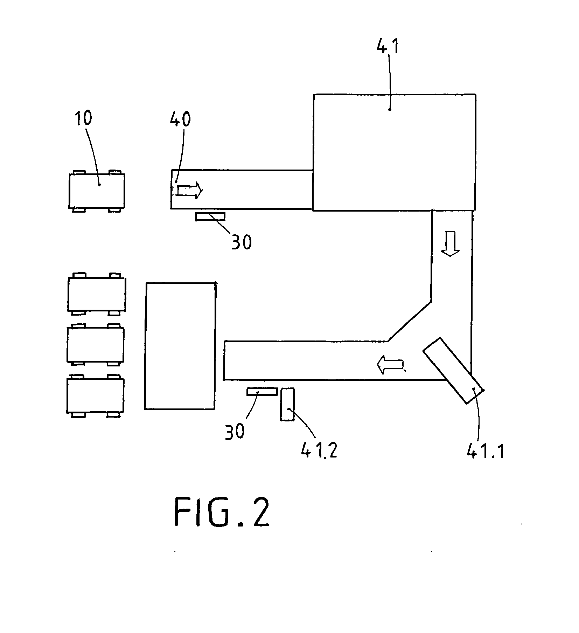

Fig. 2 zeigt eine Bearbeitungsanlage 41 mit fest installierten weiteren Bearbeitungsanlegen 41.1 und 41.2. Das Bauteil 10 wird über eine Zuführung 40, hier ein Transportband, zunächst der Bearbeitungsanlage 41 zugeführt. Am Anfang der Zuführung 40 ist eine Ausleseeinheit 30 vorgesehen. Diese liest die im Transponder 20 gespeicherten Informationen aus und gibt diese Informationen an die Steuerung der Bearbeitungsanlage 41 weiter. In der Bearbeitungsanlage 41 wird das Bauteil 10 dann wie gewünscht bearbeitet. Danach wird es der weiteren Bearbeitungsanlage 41.1 zugeführt. Diese kann beispielsweise eine Qualitätskontrolle übernehmen oder auch einen weiteren Bearbeitungsschritt am Bauteil 10 ausführen. In diesem Fall bekommt die Steuerung der weiteren Bearbeitungsanlage 41.1 ebenfalls die Informationen über das Bauteil 10 durch die Ausleseeinheit 30. Die weitere Bearbeitungsanlage 41.2 kann beispielsweise Daten zu den eben erfolgten Bearbeitungsschritten auf dem Transponder 20 des Bauteils 10 speichern. Die weitere Ausleseeinheit 30 kann dann zur Überprüfung dienen, ob die Daten auch korrekt gespeichert wurden und korrekt ausgelesen werden können. Am Ende der Zuführung 40 sind verschiedene Ablage- bzw. Transportstapel vorgesehen auf die die verschiedenen Bauteile 10 zwischengelagert werden um dann entweder weiteren Bearbeitungsanlagen 41.3, 41.4, 41.5, 41.6, dem Zwischenlager, dem Versand oder einer anderen Stelle zugeführt werden zu können. Die Bauteile 10 können auf die Zuführung 40 bzw. die Ablagestapel beispielsweise über Roboter oder automatische Gabelstapler, welche hier nicht näher dargestellt sind, transportiert werden.

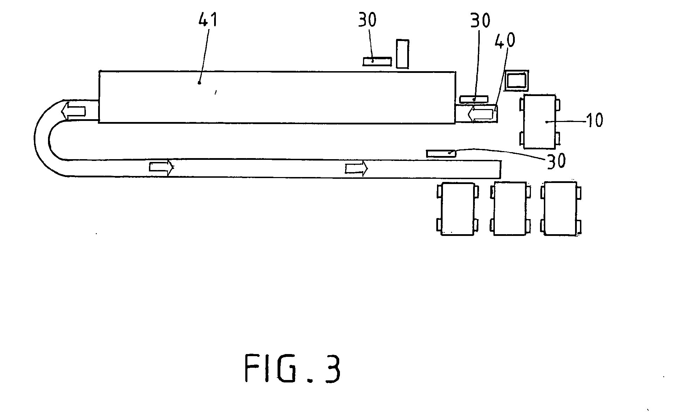

In Fig. 3 ist eine alternative Bearbeitungsanlage 41 mit Zuführung 40 für die Bauteile 10 dargestellt. Hier sind insgesamt drei Ausleseeinheiten 30 vorgesehen, welche die im Transponder 20 des Bausteils 10 gespeicherten Informationen auslesen um dann über die hier nicht näher gezeigte Steuerung dafür zu sorgen, dass in der Bearbeitungsanlage 41 das Bauteil 10 wie gewünscht bearbeitet wird. Auch hier sind wieder mehrere Ablagestapel vorgesehen, auf welche die bearbeiteten Bauteile 10 gebracht werden können um von dort aus weiter transportiert zu werden. Selbstverständlich ist es auch möglich, eine andere Anzahl an Ausleseinheiten 30 an einer Bearbeitungsanlage 41 vorzusehen.

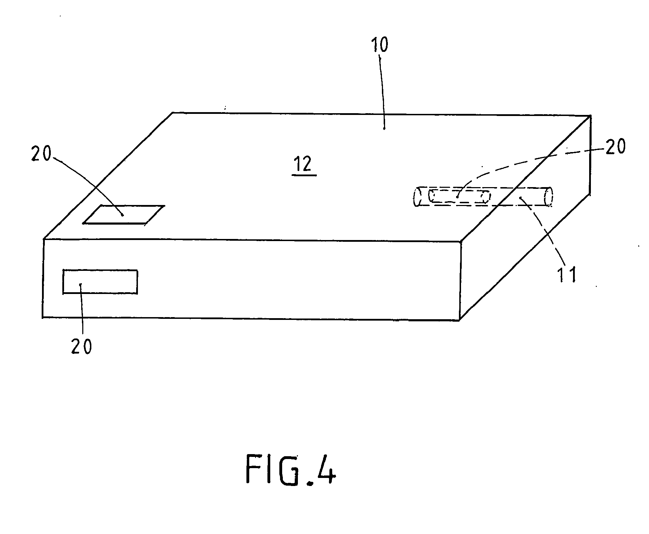

Fig. 4 zeigt schließlich ein Bauteil 10 mit verschiedenen Beispielen für eingebrachte Transponder 20. Das Bauteil 10 ist hier quaderförmig dargestellt. Selbstverständlich sind auch andere Bauformen möglich. Der Transponder 20 kann beispielsweise in eine Ausnehmung 11 bündig eingebracht werden, sodass er mit seinen Abmessungen nicht über die Ausnehmung 11 heraussteht, diese aber komplett verschließt, wie links unten in der Figur gezeigt. Auch ist es möglich die Ausnehmung 11 als Sackloch auszubilden, in welches ein in etwa zylinderförmiger Transponder 20 eingebracht werden kann, wie rechts in der Figur dargestellt. Schließlich ist es auch denkbar den Transponder 20 auf die Oberfläche 12 des Bauteils 10 aufzubringen, beispielsweise durch Kleben oder Drucken. Dies zeigt beispielhaft die Darstellung links oben. Auch weitere Möglichkeiten der Einbringung eines Transponders 20 sind denkbar.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich.

### Bezugszeichenliste:

- 10: Bauteil
- 11: Ausnehmung
- 12: Oberfläche von 10
- 20: Transponder
- 30: Ausleseeinheit
- 40: Zuführung
- 41: Bearbeitungsanlage
- 41.1: Weitere Bearbeitungsanlage
- 41.2: Weitere Bearbeitungsanlage
- 41.3: Weitere Bearbeitungsanlage
- 41.4: Weitere Bearbeitungsanlage
- 41.5: Weitere Bearbeitungsanlage
- 41.6: Weitere Bearbeitungsanlage

## Patentansprüche

1. Verfahren zur automatisierten Herstellung von Halbzeugen und Produkten in Individual- und/oder Einzelfertigung, insbesondere bei plattenförmigem Rohmaterial,
mit wenigstens einem Bauteil (10), welches bearbeitet werden soll
wobei zumindest ein Transponder (20) an dem Bauteil (10) angeordnet wird, über welchen Daten zu einem oder mehreren Bearbeitungsschritten des Bauteils (10) verfügbar sind
dass außerdem im Transponder (20) Daten zur Produktzugehörigkeit des Bauteils (10) gespeichert sind
wobei mindestens eine Ausleseeinheit (30) vorgesehen ist, die die im Transponder (20) gespeicherten Daten ausliest und an eine Steuerung weiterleitet,
wobei die Steuerung die individuelle Zuführung (40) des Bauteils (10) zu einer oder mehreren Bearbeitungsanlagen (41, 41.1, 41.2, 41.3, 41.4, 41.5, 41.6) und/oder die in der bzw. den Bearbeitungsanlagen (41, 41.1, 41.2,41.3,41.4,41.5,41.6) durchgeführten Bearbeitungsschritte steuert.

2. Verfahren nach Anspruch 1, **dadurch gekennzeichnet, dass** der Transponder (20) beim Zuschneiden des Rohmaterials am Bauteil (10) angeordnet wird.

3. Verfahren nach Anspruch 1, **dadurch gekennzeichnet, dass** eine Kantenanleimstation vorgesehen ist, welche eine Anleimkante an einer Kante des Bauteils (10) anbringt,
und dass der Transponder (20) im Bereich der Kante des Bauteils (10) automatisiert angeordnet und dann mit der Anleimkante überzogen und somit geschützt wird.

4. Verfahren nach einem der Ansprüche 1 bis 3, **dadurch gekennzeichnet, dass** die Steuerung und/oder der Transponder (20) den Versand und/oder den Transport und/oder die Zwischenlagerung des Bauteils (10) steuern.

5. Verfahren nach einem der Ansprüche 1 bis 4, **dadurch gekennzeichnet, dass** der Transponder (20) in einer Ausnehmung (11) oder Pore des Bauteils (10) angeordnet wird.

6. Verfahren nach einem der Ansprüche 1 bis 4, **dadurch gekennzeichnet, dass** der Transponder (20) auf der Oberfläche (12) des Bauteils (10) angebracht wird, insbesondere durch Kleben oder Drucken.

7. Verfahren nach einem der Ansprüche 1 bis 6, **dadurch gekennzeichnet, dass** im Transponder (20) Daten zur Identifizierung des Bauteils (10) und/oder zu dessen Montage und/oder zu dessen Bestimmungsort und/oder zu dessen Inhaltsstoffen und/oder zu dessen Recycling gespeichert sind.

8. Verfahren nach Anspruch 7, dass eine zentrale Steuerung vorgesehen ist, die über die Ausleseeinheit bzw. Ausleseeinheiten (30) Informationen über die Identität des Bauteils (10) erhält, wobei in der Steuerung oder in einem mit dieser verbundenen Speicher die Informationen über das Bauteil (10) bzw. über die einzelnen mit diesem zu vollführenden Bearbeitungsschritte und dessen Produktzugehörigkeit gespeichert sind,
und wobei dann die Steuerung nach der Identifizierung des Bauteils (10) die entsprechenden Bearbeitungsanlagen (41,41.1,41.2,41.3,41.4,41.5, 41.6) individuell steuert.

9. Verfahren nach einem der Ansprüche 1 bis 7, **dadurch gekennzeichnet, dass** die im Transponder (20) gespeicherten Daten Informationen zu den einzelnen Bearbeitungsschritten umfassen.

10. Verfahren nach Anspruch 9, **dadurch gekennzeichnet, dass** nach wenigstens einem der Bearbeitungsschritte Informationen auf dem Transponder (20) gespeichert werden.

11. Verfahren nach einem der Ansprüche 1 bis 10, **dadurch gekennzeichnet, dass** an jeder Bearbeitungsanlage (41, 41.1, 41.2, 41.3, 41.4, 41.5, 41.6) und/oder an jedem Transportmittel und/oder an jedem Zwischenlager und/oder an einer Versandstation wenigstens eine Ausleseeinheit (30) den Transponder (20) ausliest und dass insbesondere jede Bearbeitungsanlage (41, 41.1, 41.2, 41.3, 41.4, 41.5, 41.6) und/oder jedes Transportmittel dann entsprechend der so ausgelesenen Informationen mit dem Bauteil (10) verfährt.
